# EUROPÄISCHE PATENTSCHRIFT

(11) **EP 3 053 540 B1**
(45) Veröffentlichungstag und Bekanntmachung des Hinweises auf die Patenterteilung: **21.03.2018**
(21) Anmeldenummer: 15000303.6
(22) Anmeldetag: 03.02.2015
(51) Int. Cl.: A61C 8/00

(54) **Implantatschraube und Implantatsystem**
Implant screw and implant system
Vis d'implant et système d'implant

(43) Veröffentlichungstag der Anmeldung: 10.08.2016
(73) Patentinhaber: Walther, Gerd Axel, 71065 Sindelfingen (DE)
(72) Erfinder: Walther, Gerd Axel, 71065 Sindelfingen (DE)
(74) Vertreter: Patentanwälte Magenbauer & Kollegen Partnerschaft mbB

(56) Entgegenhaltungen:
- WO-A1-2005/117742
- DE-A1- 3 413 811
- DE-A1-102007 054 560
- FR-A1- 2 851 454
- US-B1- 7 207 800

## Beschreibung

Die Erfindung betrifft eine Implantatschraube für eine Dentalkrone. Ferner betrifft die Erfindung ein Implantatsystem mit einer derartigen Implantatschraube.

Aus der EP 1992304 A1 ist ein Zahnimplantat aus einem Keramikmaterial bekannt, das einen Implantatkörper zum Verankern in einem Kieferknochen und einen Implantatpfosten als Zahnträger zum Einsetzen in den Implantatkörper umfasst. Für eine Verriegelung des Implantatpfostens am Implantatkörper ist eine als Steck-Drehverbindung ausgebildete Renkverbindung vorgesehen.

Die WO 2005/117742 A1 offenbart ein Zahnimplantat mit einem Implantatkörper, der in seiner Längsachse aneinander anschließend wenigstens einen im Knochen verankerbaren enossalen Bereich, einen für den Durchtritt durch das Weichgewebe bestimmten Durchtrittsbereich sowie einen koronalen Bereich mit Retentionszapfen bildet, wobei der enossale Bereich wenigstens drei, ebenfalls in Richtung der Längsachse aufeinander folgende Teilbereiche mit unterschiedlichem Gewinde aufweist und wobei der Durchtrittsbereich mit einer girlandenartig umlaufenden Hohlkehle versehen ist.

Aus der FR 2 851 454 A1 ist ein Monoblockimplantat mit einem Gewindeabschnitt zur Verankerung im Kieferknochen bekannt, das einen als Bolzen ausgebildeten Abschnitt zum Aufsetzen der Krone und Eingriffsmittel zum Einleiten eines Drehmoments für den Einschraubvorgang umfasst. Die Eingriffsmittel sind als Bohrungen in einem umlaufenden Ringbund eingebracht und ermöglichen das Eingreifen eines Platzierungswerkzeugs, das mit Stiften ausgestattet, die zum Eingriff in die Eingriffsmittel ausgebildet sind.

Aus der DE 34 13 811 A1 ist ein künstlicher Zahnersatz bekannt, der aus einem in einen Kiefer einzusetzenden Implantat, einem Kupplungsstück, einem Kronenverbindungsstück und einem zwischen diesen angeordneten Pufferelement besteht. Um eine gewisse Beweglichkeit, die der natürlichen Zahnbeweglichkeit stark angenähert ist, zu erzielen, ist das Pufferelement in seiner Elastizität derart bemessen, daß dieses in Abhängigkeit von einer steigenden Belastung eine mindestens zweistufige Verformung erfährt, wobei in der ersten Stufe eine höhere Nachgiebigkeit als in der zweiten Stufe gegeben ist.

Die DE 10 2007 054 560 A1 zeigt ein zweiteiliges Dentalimplantat mit einem enossalem Implantatkörper zum Einsetzen in den Kiefer und einem Implantataufbau zur Aufnahme einer Zahnkrone. Der Implantataufbau ist Teil eines metallischen Stiftes, der zentrisch in den Implantatkörper hineinragt. Der Implantatkörper besteht aus Keramik, wobei der Stift im nichteinzementierten Zustand in dem Implantatkörper axial verschiebbar und über die gesamte Berührungsfläche mit diesem formschlüssig verbunden ist. Der Implantatkörper umfasst ein Außengewinde und wird mit Hilfe des Stiftes in den Kiefer eingeschraubt.

Aus der US 7,207,800 B1 ist eine Zahnimplantatanordnung bekannt, die einen Aufnahmekopf umfasst, der integral mit einem Implantatkörper verbunden ist. Der obere Abschnitt des Aufnahmekopfs hat eine Form, die durch eine lineare Wand benachbart zu einer bogenförmigen Wand gebildet wird. Ein umlaufender Ringbund ist angrenzend an den Aufnahmekopf ausgebildet, wobei ein Basisabschnitt und ein Halsabschnitt des Implantatkörpers unterschiedliche Rauhigkeitsgrade aufweisen.

Die Aufgabe der Erfindung besteht darin, eine Implantatschraube und ein Implantatsystem, das eine derartige Implantatschraube umfasst, bereitzustellen, wobei die Implantatschraube eine vorteilhafte Biokompatibilität sowie eine kompakte und mechanisch hoch belastbare Gestaltung aufweist.

Die Aufgabe der Erfindung wird gemäß einem ersten Erfindungsaspekt für eine Implantatschraube mit den Merkmalen des Anspruchs 1 gelöst. Hierbei ist vorgesehen, dass die Implantatschraube einen einstückig ausgebildeten stabförmigen Schraubenkörper mit einem Außengewindeabschnitt und einem daran angrenzenden Trägerabschnitt aufweist, wobei der Außengewindeabschnitt zum Einschrauben in einen Kieferknochen ausgebildet ist und wobei der Trägerabschnitt zur Festlegung einer Dentalkrone ausgebildet ist und wobei der Trägerabschnitt mit einem Stirnbereich des Außengewindeabschnitts eine Ringfläche bildet, in der wenigstens eine Ausnehmung zur Aufnahme eines in axialer Richtung abragenden Zapfens der Dentalkrone ausgebildet ist und wobei der Trägerabschnitt mehrere konvex geformte Anlageflächen aufweist, die durch konkav geformte Schlüsselflächen voneinander beabstandet sind.

Die Aufgabe der Erfindung wird gemäß einem zweiten Erfindungsaspekt für eine Implantatschraube mit den Merkmalen des Anspruchs 2 gelöst. Hierbei ist vorgesehen, dass die Implantatschraube einen einstückig ausgebildeten stabförmigen Schraubenkörper mit einem Außengewindeabschnitt und einem daran angrenzenden Trägerabschnitt aufweist, wobei der Außengewindeabschnitt zum Einschrauben in einen Kieferknochen ausgebildet ist und wobei der Trägerabschnitt zur Festlegung einer Dentalkrone ausgebildet ist und wobei der Trägerabschnitt mit einem Stirnbereich des Außengewindeabschnitts eine Ringfläche bildet, in der wenigstens eine Ausnehmung zur Aufnahme eines in axialer Richtung abragenden Zapfens der Dentalkrone ausgebildet ist und wobei der Trägerabschnitt genau eine konvex geformte Anlagefläche aufweist, die an eine eben geformte Schlüsselfläche angrenzt und wobei die Schlüsselfläche in einen Umfangsflächenbereich der Ausnehmung weitergeführt ist.

Durch die einstückige Gestaltung der Implantatschraube wird eine vorteilhafte mechanische Stabilität erreicht, da mechanische Schwächungszonen entfallen, wie sie bei einer zwei- oder mehrteiligen Gestaltung einer Implantatschraube in Kauf genommen werden müssen. Ferner wird die Herstellung der Implantatschraube vereinfacht, da mechanische Schnittstellen zwischen den einzelnen Abschnitten der Implantatschraube entfallen, an die ansonsten hohe Anforderungen hinsichtlich einzuhaltender Fertigungstoleranzen gestellt werden müssten. Vielmehr sind der Außengewindeabschnitt und der Trägerabschnitt aus einer, vorzugsweise homogen ausgebildeten, Materialmatrix hergestellt. Hierdurch entfallen Problemstellungen, die in unterschiedlichen physikalischen Materialeigenschaften wie beispielsweise unterschiedlichen thermischen Ausdehnungskoeffizienten und/oder unterschiedlichen chemischen Materialeigenschaften aneinandergrenzender Materialien begründet liegen könnten. Ferner entfallen Spaltbereiche zwischen separat ausgebildeten Abschnitten der Implantatschraube, die bei einer Verwendung der Implantatschraube als Bestandteil einer Dentalprothese möglichst klein gehalten werden müssen und somit sehr enge mechanische Fertigungstoleranzen erfordern, die mit einem hohen Fertigungsauswand verbunden sind.

Ferner ist vorgesehen, dass der Trägerabschnitt mit einem Stirnbereich des Außengewindeabschnitts eine Ringfläche bildet, in der wenigstens eine Ausnehmung zur Aufnahme eines in axialer Richtung abragenden Zapfens der Dentalkrone ausgebildet ist. Der Außengewindeabschnitt weist in einer Übergangszone zum Trägerabschnitt einen größeren Querschnitt als der Trägerabschnitt in diesem Bereich auf. Angesichts der im Wesentlichen stabförmigen Gestaltung der Implantatschraube weist der Außengewindeabschnitt eine dem Trägerabschnitt zugewandte, zumindest im Wesentlichen kreisförmig ausgebildete Stirnfläche auf, aus deren Zentrum heraus sich der Trägerabschnitt entwickelt. Durch die Querschnittsunterschiede ergibt sich somit in der Übergangszone eine stirnseitige Ringfläche für den Außengewindeabschnitt, die an den Trägerabschnitt angrenzt. In diese Ringfläche ist die wenigstens eine Ausnehmung eingebracht, die zur Aufnahme eines in axialer Richtung abragenden Zapfens der Dentalkrone ausgebildet ist. Die Ausnehmung in der Implantatschraube und der Zapfen an der Dentalkrone dienen einer Vergrößerung der Anlagefläche zwischen Implantatschraube und Dentalkrone und leisten somit einen Beitrag für eine zuverlässige Festlegung der Dentalkrone an der Implantatschraube.

Zweckmäßig ist es, wenn eine Hüllfläche für den Trägerabschnitt mit zunehmendem Abstand vom Außengewindeabschnitt zumindest bereichsweise verjüngt,
insbesondere konusabschnittsförmig oder pyramidenabschnittsförmig, ausgebildet ist.

Durch die verjüngte Gestaltung des Trägerabschnitts und eine korrespondierende Gestaltung einer Ausnehmung in der Dentalkrone kann eine zuverlässige, kraftschlüssige Kopplung der Dentalkrone mit dem Trägerabschnitt gewährleistet werden.

Bevorzugt ist vorgesehen, dass der Schraubenkörper aus einem Keramikmaterial hergestellt ist. Hierdurch wird eine vorteilhafte Biokompatibilität der Implantatschraube bei einer Implantation in einen Kieferknochen sichergestellt.

Bei der Erfindung gemäß dem ersten Erfindungsaspekt ist vorgesehen, dass der Trägerabschnitt mehrere konvex geformte Anlageflächen aufweist, die durch konkav geformte, Schlüsselflächen voneinander beabstandet sind. Hierdurch wird bezogen auf eine Längsachse der Implantatschraube eine Verdrehsicherung für die Dentalkrone erreicht, da durch den Wechsel der konvex geformten Anlageflächen und der Schlüsselflächen, die beispielsweise konkav geformt sein können, eine unrunde Profilierung des Trägerabschnitts in Querschnittsebenen, die parallel zur Ringfläche ausgerichtet sind, erreicht wird.

Bei der Erfindung gemäß dem zweiten Erfindungsaspekt ist vorgesehen, dass der Trägerabschnitt genau eine konvex geformte Anlagefläche aufweist, die an eine eben geformte Schlüsselfläche angrenzt. Hierdurch wird eine besonders einfache Gestaltung der Schnittstelle zwischen Implantatschraube und Dentalkrone ermöglicht.

Ferner ist vorgesehen, dass die Schlüsselfläche, insbesondere in stetiger Weise, in einen Umfangsflächenbereich der Ausnehmung weitergeführt ist. Hierdurch wird eine vorteilhafte Krafteinleitung sowohl von der Dentalkrone als auch von einem an den Trägerabschnitt angepassten Schraubwerkzeug, das zum Einschrauben der Implantatschraube in den Kieferknochen ausgebildet ist, erreicht. Mit Hilfe des Schraubwerkzeugs erfolgt bei dem Einsetzen der Implantatschraube in den Kieferknochen eine Drehmomenteinleitung in die Implantatschraube, um diese mit dem

Außengewindeabschnitt in den Kieferknochen einschrauben zu können. Durch die Weiterführung der Schlüsselfläche, über die ein erheblicher Anteil des Drehmoments vom Schraubwerkzeug auf die Implantatschraube übertragen wird, in die Ausnehmung wird die zur Drehmomentübertragung zur Verfügung stehende Fläche vergrößert. Durch diese Flächenvergrößerung wird eine lokale Kraftbelastung oder Flächenpressung für die Schlüsselfläche reduziert und damit eine Sicherheit der Implantatschraube gegen mechanische Überlastung erhöht.

Bevorzugt ist vorgesehen, dass die Ausnehmung in einem radial außenliegenden Bereich von einem Ringsteg begrenzt ist. Die Ausnehmung ist somit auf die stirnseitige Ringfläche des Außengewindeabschnitts der Implantatschraube begrenzt und erstreckt sich nicht bis in eine Umfangsfläche des Außengewindeabschnitts. Der dadurch zwischen der Ausnehmung und der Umfangsfläche verbleibende Ringsteg dient zum einen einer Stabilisierung des Außengewindeabschnitts und begünstigt somit die Krafteinleitung von der Dentalkrone oder dem Schraubwerkzeug in die Implantatschraube. Ferner weist die Implantatschraube trotz der durch die Ausnehmung verbesserten Krafteinleitung an ihrer Außenoberfläche keine unerwünschten zusätzlichen Spalte auf.

Zweckmäßig ist es, wenn die Ausnehmung in Querschnittsebenen, die parallel zur Ringfläche ausgerichtet sind, nierenförmige Querschnitte, insbesondere mit jeweils kreisförmigen und zueinander konzentrischen Abschnitten der radial innenliegenden und radial außenliegenden Umfangswände der Ausnehmung, aufweist. Hierdurch wird eine vorteilhafte Krafteinleitung von der Dentalkrone und vom Schraubwerkzeug in die Implantatschraube sowie ein vorteilhafter Kraftfluss innerhalb der Implantatschraube gewährleistet. Bevorzugt ist vorgesehen, dass die radial innenliegende Umfangswand und die radial außenliegende Umfangswand der Ausnehmung durch Wandabschnitte verbunden sind, die eine Krümmung aufweisen, deren Durchmesser einer Durchmesserdifferenz zwischen den Durchmessern der radial innenliegenden und außenliegenden Umfangswände entspricht. Besonders bevorzugt weist die Ausnehmung einen parallel zur Ringfläche ausgerichteten Bodenbereich auf, wobei Übergänge vom Bodenbereich zu den Wandabschnitten verrundet ausgebildet sind, um auch hier bei einer Krafteinleitung in die Implantatschraube Kraftspitzen im Kraftfluss zu vermeiden, die zu einer lokalen Überlastung des Material der Implantatschraube führen könnten.

Bevorzugt ist vorgesehen, dass die Ausnehmung an einem Übergangsbereich zur Ringfläche trichterförmig aufgeweitet ist und/oder dass zwischen der Ringfläche und den konvex ausgebildeten Anlageflächen jeweils ein konkaver Übergangsbereich ausgebildet ist. Durch diese Maßnahmen werden Kraftspitzen vermieden und ein homogener Kraftfluss in der Implantatschraube gewährleistet.

Die Aufgabe der Erfindung wird gemäß einem zweiten Aspekt von einem Implantatsystem gelöst, wie es im Anspruch 9 angegeben ist. Dabei umfasst das Implantatsystem eine Implantatschraube nach einem der Ansprüche 1 bis 9 sowie ein Schraubwerkzeug zum Einschrauben der Implantatschraube in den Kieferknochen, wobei das Schraubwerkzeug wenigstens einen in axialer Richtung abragenden Zapfen aufweist, der in einer Schraubposition für einen Eingriff in eine zugeordnete Ausnehmung der Implantatschraube ausgebildet ist.

Ferner umfasst das Implantatsystem eine Dentalkrone, die für eine kraftschlüssige Montage am Trägerabschnitt ausgebildet ist und die wenigstens einen in axialer Richtung abragenden Zapfen aufweist, der in einer Montageposition für einen Eingriff in eine zugeordnete Ausnehmung der Implantatschraube ausgebildet ist.

Vorteilhafte Ausführungsformen einer Implantatschraube sind in der Zeichnung dargestellt. Hierbei zeigt:
- Figur 1: eine perspektivische Darstellung einer ersten Ausführungsform einer Implantatschraube mit einem Außengewindeabschnitt, einem sternförmig profilierten Trägerabschnitt und mehreren in einer Ringfläche zwischen Außengewindeabschnitt und Trägerabschnitt ausgebildeten Ausnehmungen,
- Figur 2: eine Draufsicht auf die Implantatschraube gemäß der Figur 1,

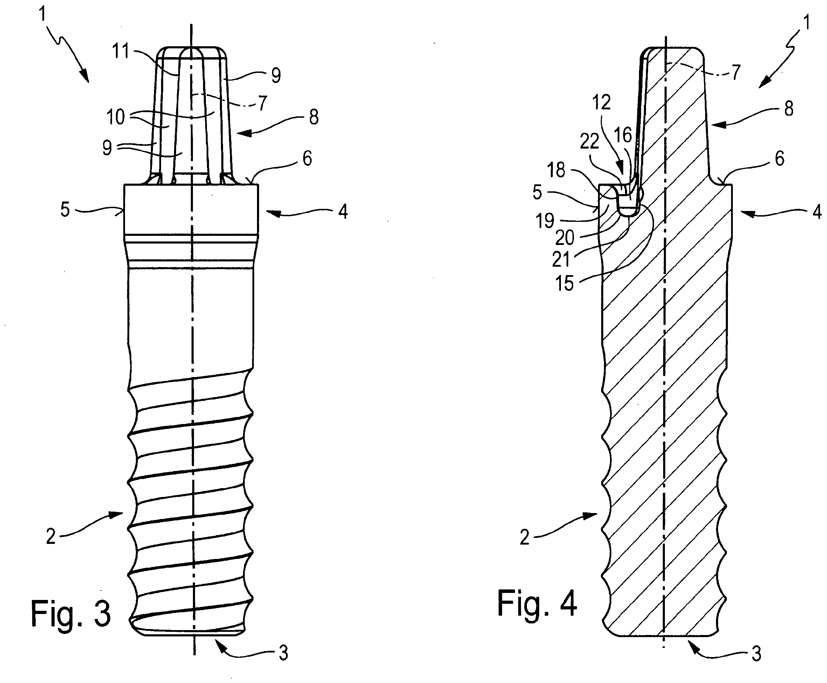

- Figur 3: eine Vorderansicht auf die Implantatschraube gemäß der Figur 1,
- Figur 4: eine Schnittdarstellung der Implantatschraube gemäß der Figur 1,
- Figur 5: eine perspektivische Darstellung einer zweiten Ausführungsform einer Implantatschraube mit einer zugehörigen Kappe und einem Zementvolumen, das einen Zementspalt zwischen Implantatschraube und Kappel ausfüllt, und
- Figur 6: eine Detailschnittdarstellung der komplementären Geometrien der Implantatschraube und der Kappe gemäß der Figur 6.

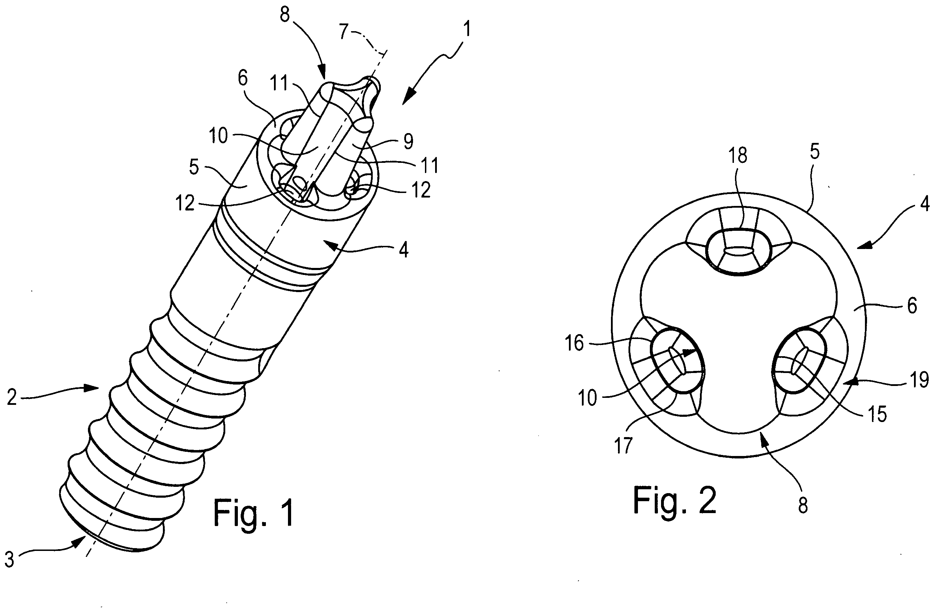

Eine in der Figur 1 dargestellte Implantatschraube 1 ist als Träger für eine nicht dargestellte Dentalkrone vorgesehen und ist zum Einschrauben in einen ebenfalls nicht dargestellten Kieferknochen vorgesehen.

Die Implantatschraube 1 ist vorzugweise aus einem keramischen Werkstoff auf der Basis von Zirkonoxid oder einer Zirkonoxid/Aluminiumoxid-Mischung oder aus einem anderen nichtmetallischen Material, z.B. einem faserverstärkten Kunststoff auf Carbonbasis hergestellt. Alternativ kann die Implantatschraube 1 auch aus einem metallischen Material, insbesondere Titan, hergestellt sein.

Die als einstückiger Schraubenkörper ausgebildete Implantatschraube 1 umfasst einen Außengewindeabschnitt 2, der im wesentlichen eine stabfömige Gestalt aufweist, also zumindest bereichsweise von einer zylindrischen bzw. geringfügig konischen Hüllkurve umgeben werden kann. Exemplarisch ist der Außengewindeabschnitt 2 mit einem selbstschneidenden Gewinde versehen, so dass die Implantatschraube 1 unmittelbar in ein vorgebohrtes, im Wesentlichen zylindrisches Kernloch im Kieferknochen eingeschraubt werden kann. In einem endseitigen Spitzenbereich 3 ist der Außengewindeabschnitt 2 stark verjüngt ausgebildet und läuft spitz zu, um den Einschraubvorgang in das vorgebohrte Kernloch im Kieferknochen zu begünstigen. Vorzugsweise weist das Kernloch einen Durchmesser auf, der kleiner als ein maximaler Kerndurchmesser des Außengewindeabschnitts 2 ausgeführt ist. Hierdurch wird eine vorteilhafte Verankerung der Implantatschraube 1 im Kieferknochen begünstigt. Bei einer nicht dargestellten Variante der Implantatschraube 1 ist anstelle der Verjüngung des Außengewindeabschnitts 2 ein im Wesentlichen zylindrischer Außengewindeabschnitt vorgesehen, der von einer im Wesentlichen kreisrunden Endfläche begrenzt ist.

An einem oberen Endbereich des Außengewindeabschnitts 2 ist ein Zapfenbereich 4 vorgesehen, der eine exemplarisch zylindrisch ausgebildete Umfangsfläche 5 und eine im Wesentlichen ebene, beispielhaft kreisrunde Stirnfläche 6 aufweist, die vorliegend eben ausgebildet ist und die auch als Schulterebene bezeichnet wird. Aus der beispielhaft eben ausgeführten Stirnfläche 6 entwickelt sich in Richtung einer Längsachse 7 der Implantatschraube 1 ein Trägerabschnitt 8. Der Trägerabschnitt 8 ist für eine Aufnahme des nicht dargestellten Dentalimplantats vorgesehen und ist mit zunehmenden Abstand von der Stirnfläche 6 verjüngt ausgeführt. Exemplarisch weist der Trägerabschnitt 8 in nicht dargestellten, parallel zur Stirnfläche 6 ausgerichteten Querschnittsebenen jeweils einen sternförmigen Querschnitt auf, der durch konvexe Anlageflächen 9 und konkave Schlüsselfächen 10 bestimmt ist. Beispielhaft weist der Trägerabschnitt 8 jeweils drei Anlageflächen 9 und drei Schlüsselflächen 10 auf.

Bevorzugt ist vorgesehen, dass zwischen den Anlageflächen 9 und den Schlüsselflächen 10 jeweils Kanten 11 ausgebildet sind, die in der Art einer Verzahnung wirken. Hierdurch wird eine Einleitung eines Drehmoments von einem nicht dargestellten Schraubwerkzeug auf die Implantatschraube 1 erleichtert. Bei einer nicht dargestellten Ausführungsform einer Implantatschraube ist ein stetiger, insbesondere verrundeter Übergang zwischen den Anlageflächen und den Schlüsselflächen vorgesehen.

Ferner ist vorgesehen, dass sich die konkaven Schlüsselflächen 10 bis in Ausnehmungen 12 erstrecken, die in der Stirnfläche 6 eingebracht sind. Bevorzugt ist vorgesehen, dass die Stirnflächen 6 jeweils stetig, insbesondere mit konstanter Profilierung, in den jeweiligen, parallel zur Stirnfläche ausgerichteten Querschnittsebenen, bis in die Ausnehmungen 12 erstreckt sind und eine radial innenliegende Umfangswand 15 der jeweiligen Ausnehmung 12 bilden. An diese radial innenliegende Umfangswand 15 schließen sich beidseitig jeweils im Wesentlichen halbkreisförmig gekrümmte Verbindungswände 16, 17 an, die ihrerseits in eine radial außenliegende Umfangswand 18 übergehen. Hierdurch weisen die Ausnehmungen 12 jeweils einen im Wesentlichen nierenförmigen Querschnitt auf. Beispielhaft ist vorgesehen, dass die radial innenliegende Umfangswand 15 und die radial außenliegende Umfangswand 18 jeweils kreisabschnittsförmig profiliert sind und konzentrisch zur Längsachse 7 ausgebildet sind.

Ein Radius für die kreisförmig gekrümmte, radial außenliegende Umfangswand 18 ist kleiner als ein Radius der zylindrisch ausgebildeten Umfangsfläche 5 des Zapfenbereichs 4 gewählt. Exemplarisch ist ferner vorgesehen, dass die Krümmung der Umfangsfläche 5 und die Krümmung der Umfangswand 18 konzentrisch zueinander ausgerichtet sind. Daraus resultiert, dass die Ausnehmung 12 in radialer Richtung nach außen zumindest im Wesentlichen von einem kreisringabschnittsförmigen Ringsteg 19 begrenzt ist. Dieser Ringsteg 19 verbindet jeweils benachbarte Abschnitte des Zapfenbereichs 4, die nicht von Ausnehmungen 12 durchsetzt sind und trägt somit zu einer Stabilisierung des Zapfenbereichs 4 bei.

Die Ausnehmungen 12 sind sowohl an einem ersten Übergangsbereich 20 zwischen einem Boden 21 und den Umfangswänden 15, 18 und den Verbindungswänden 16, 17 als auch an einem zweiten Übergangsbereich 22 zwischen den Umfangswänden 15, 18 und den Verbindungswänden 16, 17 verrundet ausgebildet. Dabei ist der erste Übergangsbereich 20 als konkave Verrundung ausgebildet, während der zweite Übergangsbereich 22 konvex verrundet ausgebildet ist.

Ein Implantatsystem umfasst neben der Implantatschraube 1 ein nicht näher dargestelltes Schraubwerkzeug, das in der Art einer Stecknuss ausgeführt sein kann, wie sie zum Betätigen von Schrauben mit Sechskantkopf eingesetzt werden. Dementsprechend weist das Schraubwerkzeug eine Ausnehmung auf, die geometrisch ähnlich, insbesondere nahezu identisch, mit dem Trägerabschnitt 8 der Implantatschraube 1 ist. Somit kann das Schraubwerkzeug zumindest nahezu spielfrei auf den Trägerabschnitt 8 der Implantatschraube 1 aufgesetzt werden und ermöglicht über die Anlageflächen 9 und/oder die Schlüsselflächen 10 eine Drehmomenteinleitung in die Implantatschraube 1, um diese in einen Kieferknochen einschrauben zu können.

Dabei weist das, vorzugsweise aus einem Kunststoffmaterial, insbesondere aus PEEK (Polyethetherketon) hergestellte, Schraubwerkzeug an einer im Wesentlichen ringförmig ausgebildeten, während des Einschraubvorgangs der Stirnfläche 6 zugewandten Vorderseite vorzugsweise mehrere in axialer Richtung abragende Zapfen auf, die jeweils für einen Eingriff in die zugeordnete Ausnehmung 12 der Implantatschraube 1 ausgebildet sind. Neben einer vorteilhaften Zentrierungswirkung durch die Wechselwirkung der Zapfen mit den Ausnehmungen 12 wird eine effektiv zur Verfügung stehende Kontaktfläche zwischen dem Schraubwerkzeug und der Implantatschraube 1 vergrößert.

Hierdurch wird unter Beibehaltung einer durchschnittlichen Flächenpressung zwischen Schraubwerkzeug und Implantatschraube 1 ein maximal zulässiges Drehmoment, das vom Schraubwerkzeug auf die Implantatschraube 1 eingeleitet werden kann, vergrößert. Hierdurch wird ein sicheres Einschrauben der Implantatschraube 1 in den Kieferknochen auch bei ansonsten ungünstigen Randbedingungen gewährleistet.

Nach dem Einschrauben der Implantatschraube 1 in den Kieferknochen kann zu einem geeigneten Zeitpunkt ein Aufsetzen der nicht dargestellten Dentalkrone auf den Trägerabschnitt 8 erfolgen. Da die Dentalkrone wie das Schraubwerkzeug ebenfalls mit in axialer Richtung abragenden Zapfen ausgestattet ist, steht im Vergleich zu einer Implantatschraube ohne Ausnehmungen eine größere Kontaktfläche zwischen dem Trägerabschnitt 8 und der Dentalkrone zur Verfügung, so dass die Dentalkrone mit einer verbesserten Haltekraft in kraftschlüssiger Weise an der Implantatschraube 1 festgelegt werden kann. Ferner kann aufgrund der größeren Kontaktfläche zwischen dem Trägerabschnitt 8 und der Dentalkrone die Ausdehnung des Trägerabschnitts 8 ausgehend von der Stirnfläche 6 in Richtung der Längsachse 7 minimiert werden, so dass ein vorteilhafter Gestaltungsspielraum für die Gestaltung der Dentalkrone geschaffen wird.

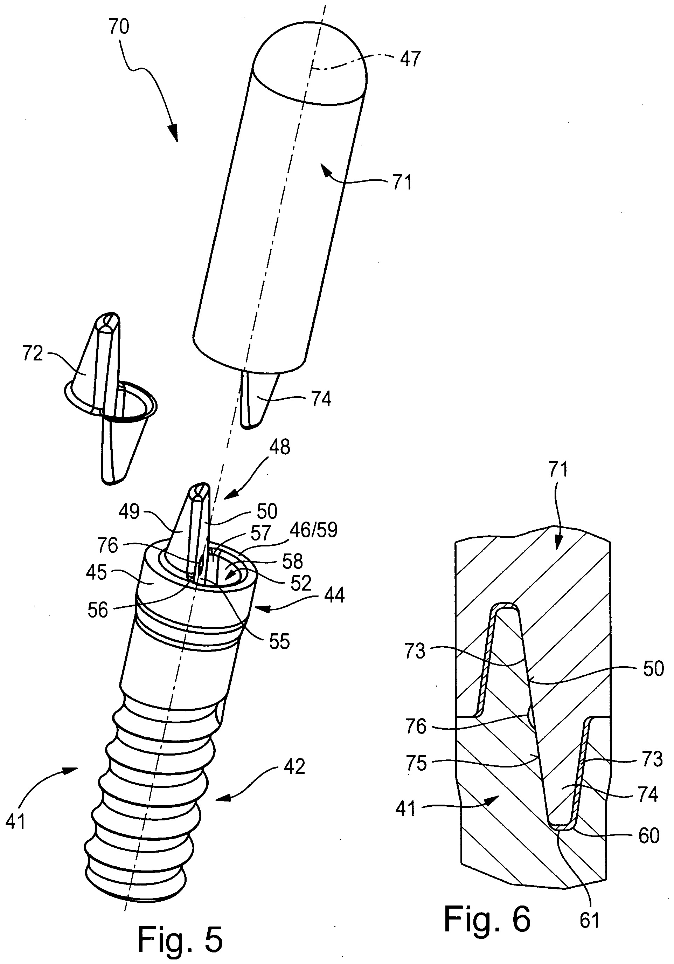

Für die nachfolgende Beschreibung der in den Figuren 5 und 6 gezeigten zweiten Ausführungsform einer Implantatschraube 41 werden für funktionsgleiche Elemente die gleichen Bezeichnungen wie für die erste Implantatschraube 1 verwendet, jedoch die Bezugszeichen um 40 erhöht.

Übereinstimmend mit der Implantatschraube 1 weist auch die Implantatschraube 41 einen Außengewindeabschnitt 42, einen Zapfenbereich 44 und einen Trägerabschnitt 48 auf. Der Zapfenbereich 44 weist ebenfalls eine exemplarisch zylindrisch ausgebildete Umfangsfläche 45 und eine endseitige, kreisrunde Stirnfläche 46 auf. Abweichend von der Implantatschraube 1 ist bei der Implantatschraube 41 der Trägerabschnitt 48 exzentrisch zu der Längsachse 47 angeordnet und weist in senkrecht zur Längsachse 47 ausgerichteten Querschnittsebenen jeweils kreisabschnittsförmige Querschnitte auf. In Richtung der Längsachse 47 ist der Trägerabschnitt 48 keilförmig profiliert mit einer konvexen Anlagefläche 49 und einer ebenen Schlüsselfläche 50 ausgeführt.

Die eben ausgeführte Schlüsselfläche 50 erstreckt sich bis in eine Ausnehmung 52, die in der Stirnfläche 46 eingebracht sind. Bevorzugt ist vorgesehen, dass die Stirnfläche 46 mit der Schlüsselfläche 50 eine gemeinsame Ebene und eine radial innenliegende Umfangswand 55 der jeweiligen Ausnehmung 52 bilden. An diese radial innenliegende Umfangswand 55 schließen sich beidseitig jeweils im Wesentlichen halbkreisförmig gekrümmte Verbindungswände 56, 57 an, die ihrerseits in eine radial außenliegende Umfangswand 58 übergehen. Dementsprechend weist die Ausnehmungen 52 einen kreisabschnittsförmigen Querschnitt auf.

Ein Radius für die kreisförmig gekrümmte, radial außenliegende Umfangswand 58 ist kleiner als ein Radius der zylindrisch ausgebildeten Umfangsfläche 45 des Zapfenbereichs 44 gewählt. Exemplarisch ist ferner vorgesehen, dass die Krümmung der Umfangsfläche 45 und die Krümmung der Umfangswand 58 konzentrisch zueinander ausgerichtet sind. Daraus resultiert, dass die Ausnehmung 52 in radialer Richtung nach außen zumindest im Wesentlichen von einem kreisringabschnittsförmigen Ringsteg 59 begrenzt ist.

Wie insbesondere aus der Schnittdarstellung der Figur 6 entnommen werden kann ist die Ausnehmung 52 sowohl an einem ersten Übergangsbereich 60 zwischen einem Boden 61 und den Umfangswänden 55, 58 und den Verbindungswänden 56, 57 als auch an einem zweiten Übergangsbereich 62 zwischen den Umfangswänden 55, 58 und den Verbindungswänden 56, 57 verrundet ausgebildet. Dabei ist der erste Übergangsbereich 60 als konkave Verrundung ausgebildet, während der zweite Übergangsbereich 62 konvex verrundet ausgebildet ist.

Ein in der Figur 5 dargestelltes Implantatsystem 70 umfasst neben der Implantatschraube 41 eine Dentalkrone 71, die als unbearbeiteter Rohling dargestellt ist und die durch einen spanenden Bearbeitungsvorgang, insbesondere durch einen Schleifvorgang in nicht näher dargestellter Weise als Zahnersatz geformt werden kann. Die Dentalkrone 71 weist an einem zur Festlegung an der Implantatschraube 41 vorgesehenen Endbereich eine Geometrie auf, die exemplarisch komplementär zur Geometrie der Implantatschraube 41 ausgebildet ist. Dementsprechend ist ein Trägerabschnitt 74 geometrisch identisch zum Trägerabschnitt 48 der Implantatschraube 41 ausgebildet und für einen Eingriff in die Ausnehmung 52 vorgesehen.

Zudem weist die Dentalkrone 71 eine exemplarisch identisch zur Ausnehmung 52 ausgebildete, nicht dargestellte Ausnehmung auf, die zur Aufnahme des Trägerabschnitts 48 der Implantatschraube 41 vorgesehen ist.

Beispielhaft ist vorgesehen, dass die Geometrie in der Implantatschraube 41 und der Dentalkrone 71 derart aufeinander abgestimmt sind, dass in den jeweiligen Ausnehmungen nach einem Eingriff der jeweiligen Trägerabschnitte 48, 74 ein Zementspalt 73 ausgebildet wird. In diesem Zementspalt 73 wird bei der Anbringung der Dentalkrone 71 an der Implantatschraube 41 eine formlose Zementmasse eingebracht, die anschließend ausgehärtet werden kann.

Rein exemplarisch ist in der Figur 5 das zwischen der Implantatschraube 41 und der Dentalkrone 71 vorgesehen Zementvolumen 72 als eigenständiger Körper eingezeichnet. Wie aus der Schnittdarstellung der Figur 6 zu entnehmen ist, sind die beiden Trägerabschnitte 48 und 74 derart aufeinander abgestimmt, dass die jeweiligen Schlüsselflächen 50, 75 unmittelbar aneinander anliegen, um eine besonders exakte Positionierung der Dentalkrone 71 an der Implantatschraube 41 zu gewährleisten.

Bevorzugt ist in wenigstens einer der Schlüsselflächen 50, 75, insbesondere in beiden gegenüberliegenden Schlüsselflächen 50, 75 wenigstens eine Ausnehmung 76 ausgebildet, die zur Aufnahme von Zementmasse dient und für eine Vergrößerung der Haftwirkung zwischen den beiden Schlüsselfächen 50, 75 vorgesehen ist.

Eine oder mehrere derartiger Ausnehmungen können auch an wenigstens einer Schlüsselfläche 10 der Implantatschraube 1 vorgesehen werden.

## Patentansprüche

1. Implantatschraube für eine Dentalkrone, mit einem einstückig ausgebildeten stabförmigen Schraubenkörper (1; 41), der einen Außengewindeabschnitt (2; 42) und einen daran angrenzenden Trägerabschnitt (8; 48) aufweist, wobei der Außengewindeabschnitt (2; 42) zum Einschrauben in einen Kieferknochen ausgebildet ist und wobei der Trägerabschnitt (8; 48) zur Festlegung einer Dentalkrone (71) ausgebildet ist, wobei der Trägerabschnitt (8; 48) mit einem Stirnbereich (6; 46) des Außengewindeabschnitts (2; 42) eine Ringfläche bildet, in der wenigstens eine Ausnehmung (12; 52) zur Aufnahme eines in axialer Richtung abragenden Zapfens (74) der Dentalkrone (71) ausgebildet ist, wobei der Trägerabschnitt (8) mehrere konvex geformte Anlageflächen (9) aufweist, die durch konkav geformte Schlüsselflächen (10) voneinander beabstandet sind.

2. Implantatschraube für eine Dentalkrone, mit einem einstückig ausgebildeten stabförmigen Schraubenkörper (41), der einen Außengewindeabschnitt (42) und einen daran angrenzenden Trägerabschnitt (48) aufweist, wobei der Außengewindeabschnitt (42) zum Einschrauben in einen Kieferknochen ausgebildet ist und wobei der Trägerabschnitt (48) zur Festlegung einer Dentalkrone (71) ausgebildet ist, wobei der Trägerabschnitt (48) mit einem Stirnbereich (46) des Außengewindeabschnitts (42) eine Ringfläche bildet, in der wenigstens eine Ausnehmung (52) zur Aufnahme eines in axialer Richtung abragenden Zapfens (74) der Dentalkrone (71) ausgebildet ist, wobei der Trägerabschnitt (48) genau eine konvex geformte, Anlagefläche (49) aufweist, die an eine eben geformte Schlüsselfläche (50) angrenzt und wobei die Schlüsselfläche (50) in einen Umfangsflächenbereich (55) der Ausnehmung (52) weitergeführt ist.

3. Implantatschraube nach Anspruch 1 oder 2, **dadurch gekennzeichnet, dass** eine Hüllfläche für den Trägerabschnitt (8; 48) mit zunehmendem Abstand vom Außengewindeabschnitt (2; 42) zumindest bereichsweise verjüngt, insbesondere konusabschnittsförmig oder pyramidenabschnittsförmig, ausgebildet ist.

4. Implantatschraube nach Anspruch 1, 2 oder 3, **dadurch gekennzeichnet, dass** der Schraubenkörper (1; 41) aus einem Keramikmaterial hergestellt ist.

5. Implantatschraube nach Anspruch 1, **dadurch gekennzeichnet, dass** die Schlüsselfläche (10; 50), insbesondere in stetiger Weise, in einen Umfangsflächenbereich (15; 55) der Ausnehmungen (12; 52) weitergeführt ist.

6. Implantatschraube nach einem der vorhergehenden Ansprüche, **dadurch gekennzeichnet, dass** die Ausnehmung (12; 52) in einem radial außenliegenden Bereich von einem Ringsteg (19; 59) begrenzt ist.

7. Implantatschraube nach einem der vorhergehenden Ansprüche, **dadurch gekennzeichnet, dass** die Ausnehmung (12) in Querschnittsebenen, die parallel zur Ringfläche (6) ausgerichtet sind, nierenförmige Querschnitte, insbesondere mit jeweils kreisabschnittsförmigen und zueinander konzentrischen Abschnitten der radial innenliegenden und radial außenliegenden Umfangswände (15, 18) der Ausnehmung (12), aufweist.

8. Implantatschraube nach einem der vorhergehenden Ansprüche, **dadurch gekennzeichnet, dass** die Ausnehmung (12; 52) an einem Übergangsbereich zur Ringfläche (6; 46) trichterförmig aufgeweitet ist und/oder dass zwischen der Ringfläche (6; 46) und den konvex ausgebildeten Anlageflächen (9; 49) jeweils ein konkaver Übergangsbereich ausgebildet ist.

9. Implantatsystem mit einer Implantatschraube (1; 41) nach einem der vorhergehenden Ansprüche sowie mit einem Schraubwerkzeug zum Einschrauben der Implantatschraube (1; 41) in den Kieferknochen, **dadurch gekennzeichnet, dass** das Schraubwerkzeug wenigstens einen in axialer Richtung abragenden Zapfen aufweist, der in einer Schraubposition für einen Eingriff in eine zugeordnete Ausnehmung der Implantatschraube (1; 41) ausgebildet ist.

10. Implantatsystem nach Anspruch 9, mit einer Dentalkrone (71), die für eine kraftschlüssige Montage am Trägerabschnitt (8; 48) ausgebildet ist und die wenigstens einen in axialer Richtung abragenden Zapfen (74) aufweist, der in einer Montageposition für einen Eingriff in eine zugeordnete Ausnehmung (12; 52) der Implantatschraube (1; 41) ausgebildet ist.

## Claims

1. Implant screw for a dental crown, with a one-piece rod-shaped screw body (1; 41) which has an external thread section (2; 42) and a support section (8; 48) adjacent to the former, wherein the external thread section (2; 42) is designed for screwing into a jawbone and wherein the support section (8; 48) is designed for fixing a dental crown (71), wherein the support section (8; 48) forms with an end section (6; 46) of the external thread section (2; 42) an annular surface in which is formed at least one recess (12; 52) for accommodating an axially protruding pin (74) of the dental crown (71), wherein the support section (8) has several contact faces (9), convex in shape, and spaced apart from one another by concavely-shaped keying surfaces (10).

2. Implant screw for a dental crown, with a one-piece rod-shaped screw body (41) which has an external thread section (42) and a support section (48) adjacent to the former, wherein the external thread section (42) is designed for screwing into a jawbone and wherein the support section (48) is designed for fixing a dental crown (71), wherein the support section (48) forms with an end section (46) of the external thread section (42) an annular surface in which is formed at least one recess (52) for accommodating an axially protruding pin (74) of the dental crown (71), wherein the support section (48) has exactly one contact face (49), convex in shape, and adjacent to a flatly-shaped keying surface (50), and wherein the keying surface (50) is continued in a peripheral surface area (55) of the recess (52).

3. Implant screw according to claim 1 or 2, **characterised in that** a casing surface for the support section (8; 48) tapers, at least in certain areas, with increasing distance from the external thread section (2; 42), and is in particular in the shape of a cone section or a pyramid section.

4. Implant screw according to claim 1, 2 or 3, **characterised in that** the screw body (1; 41) is made of a ceramic material.

5. Implant screw according to claim 1, **characterised in that** the keying surface (10; 50) is continued in a peripheral surface area (15; 55) of the recess (12; 52), in particular in a constant manner.

6. Implant screw according to any of the preceding claims, **characterised in that** the recess (12; 52) is bounded by a ring bar (19; 59) in a radially outer-lying area.

7. Implant screw according to any of the preceding claims, **characterised in that** the recess (12) has, in cross-sectional planes aligned parallel to the annular surface (6), kidney-shaped cross-sections, in particular with in each case sections of the radially inner and radially outer peripheral walls (15, 18) of the recess (12) which are circular-section-shaped and concentric to one another.

8. Implant screw according to any of the preceding claims, **characterised in that** the recess (12; 52) is expanded in a funnel shape at a transitional area of the annular surface (6; 46), and/or that a concave transitional area is formed in each case between the annular surface (6; 46) and the convex contact faces (9; 49).

9. Implant system with an implant screw (1; 41) according to any of the preceding claims, together with a screwdriver for screwing the implant screw (1; 41) into the jawbone, **characterised in that** the screwdriver has at least one pin protruding in the axial direction, which is designed in a screwing position for engagement in an assigned recess of the implant screw (1; 41).

10. Implant system according to claim 9, with a dental crown (71) which is designed for force-fitting to the support section (8; 48) and which has at least one pin (74) protruding in the axial direction, which is designed in a fitting position for engagement in an assigned recess (12; 52) of the implant screw (1; 41).

## Revendications

1. Vis d'implant pour une couronne dentaire, comprenant un corps de vis (1 ; 41) en forme de barre réalisé d'un seul tenant, qui présente une section filetée extérieure (2 ; 42) et une section de support (8 ; 48) adjacente à cette dernière, dans laquelle la section filetée extérieure (2 ; 42) est réalisée pour être vissée dans un maxillaire et dans laquelle la section de support (8 ; 48) est réalisée pour la fixation d'une couronne dentaire (71), dans laquelle la section de support (8 ; 48) forme avec une zone frontale (6 ; 46) de la section filetée extérieure (2 ; 42) une surface annulaire, dans laquelle au moins un évidement (12; 52) servant à recevoir un tourillon (74), dépassant dans une direction axiale, de la couronne dentaire (71) est réalisé, dans laquelle la section de support (8) présente plusieurs surfaces d'appui (9) à forme convexe, qui sont espacées les unes des autres par des surfaces pour clés (10) à forme concave.

2. Vis d'implant pour une couronne dentaire, comprenant un corps de vis (41) en forme de barre réalisé d'un seul tenant, qui présente une section filetée extérieure (42) et une section de support (48) adjacente à cette dernière, dans laquelle la section filetée extérieure (42) est réalisée pour être vissée dans un maxillaire et dans laquelle la section de support (48) est réalisée pour la fixation d'une couronne dentaire (71), dans laquelle la section de support (48) forme avec une zone frontale (46) de la section filetée extérieure (42) une surface annulaire, dans laquelle au moins un évidement (52) servant à recevoir un tourillon (74), dépassant dans une direction axiale, de la couronne dentaire (71) est réalisé, dans laquelle la section de support (48) présente précisément une surface d'appui (49) à forme convexe, qui est adjacente à une surface pour clés (50) à forme plate et dans laquelle la surface pour clés (50) est guidée ultérieurement dans une zone de surface périphérique (55) de l'évidement (52).

3. Vis d'implant selon la revendication 1 ou 2, **caractérisée en ce qu'**une surface enveloppante pour la section de support (8 ; 48) est réalisée de manière rétrécie au moins par endroits au fur et à mesure que la distance par rapport à la section filetée extérieure (2 ; 42) augmente, en particulier de manière à présenter une forme de section conique ou une forme de section pyramidale.

4. Vis d'implant selon la revendication 1, 2 ou 3, **caractérisée en ce que** le corps de vis (1 ; 41) est fabriqué à partir d'un matériau en céramique.

5. Vis d'implant selon la revendication 1, **caractérisée en ce que** la surface pour clés (10 ; 50) est guidée ultérieurement, en particulier de manière constante, dans une zone de surface périphérique (15 ; 55) des évidements (12;52).

6. Vis d'implant selon l'une quelconque des revendications précédentes, **caractérisée en ce que** l'évidement (12 ; 52) est délimité par une entretoise annulaire (19 ; 59) dans une zone située radialement à l'extérieur.

7. Vis d'implant selon l'une quelconque des revendications précédentes, **caractérisée en ce que** l'évidement (12) présente dans des plans de coupe transversale, qui sont orientés de manière parallèle par rapport à la surface annulaire (6), des sections transversales en forme de rein, en particulier pourvues de sections respectivement en forme de section circulaire et concentriques les unes par rapport aux autres des parois périphériques (15, 18), situées radialement à l'intérieur et situées radialement à l'extérieur, de l'évidement (12).

8. Vis d'implant selon l'une quelconque des revendications précédentes, **caractérisée en ce que** l'évidement (12 ; 52) est élargi de manière à présenter une forme d'entonnoir au niveau d'une zone de transition vers la surface annulaire (6 ; 46), et/ou que respectivement une zone de transition concave est réalisée entre la surface annulaire (6 ; 46) et les surfaces d'appui (9 ; 49) réalisées de manière convexe.

9. Système d'implant comprenant une vis d'implant (1 ; 41) selon l'une quelconque des revendications précédentes ainsi que comprenant un outil de vissage servant à visser la vis d'implant (1 ; 41) dans le maxillaire, **caractérisé en ce que** l'outil de vissage présente au moins un tourillon dépassant dans une direction axiale, qui est réalisé en vue d'une prise avec un évidement associé de la vis d'implant (1 ; 41) dans une position de vissage.

10. Système d'implant selon la revendication 9, comprenant une couronne dentaire (71), qui est réalisée pour un montage à force au niveau de la section de support (8 ; 48) et qui présente au moins un tourillon (74) dépassant dans une direction axiale, qui est réalisé en vue d'une prise avec un évidement (12 ; 52) associé de la vis d'implant (1, 41) dans une position de montage.
